(19) Europäisches Patentamt
European Patent Office
Office européen des brevets

(11) **EP 1 798 260 A1**

(12) **EUROPEAN PATENT APPLICATION**
published in accordance with Art. 158(3) EPC

(43) Date of publication:
**20.06.2007 Bulletin 2007/25**

(21) Application number: **05793800.3**

(22) Date of filing: **06.10.2005**

(51) Int Cl.:
*C08L 83/06* *(2006.01)*   *C08K 3/22* *(2006.01)*
*C09D 7/14* *(2006.01)*   *C09D 183/06* *(2006.01)*
*G02B 1/10* *(2006.01)*

(86) International application number:
**PCT/JP2005/018827**

(87) International publication number:
**WO 2006/038725 (13.04.2006 Gazette 2006/15)**

(84) Designated Contracting States:
**DE ES FR IT**

(30) Priority: **08.10.2004 JP 2004295751**

(71) Applicant: **TOKUYAMA CORPORATION**
Shunan-shi, Yamaguchi 745-0053 (JP)

(72) Inventors:
• **Mori, Katsuhiro,**
Tokuyama Corporation
Shunan-shi, Yamaguchi 745-0053 (JP)

• **Momoda, Junji,**
Tokuyama Corporation
Shunan-shi, Yamaguchi 745-0053 (JP)

(74) Representative: **Albrecht, Thomas**
Kraus & Weisert,
Thomas-Wimmer-Ring 15
80539 München (DE)

(54) **COATING COMPOSITIONS AND PROCESS FOR PRODUCTION THEREOF**

(57) A process for producing a composition comprising (A) a metal oxide sol containing an amine compound, such as diisopropylamine, (B) a polycondensable silicon compound having an epoxy group, such as γ-glycidoxypropyltrimethoxysilane, and (C) a curing catalyst such as tris(2,4-pentanedionato)aluminum (III), the process comprising the steps of:
mixing the component (A) with the component (B) at a temperature of 10°C or higher and lower than 40°C for 6 hours or longer; and
mixing the obtained mixture with the above component (C).

There is provided a process for producing the coating composition to provide a hard coat which has excellent adhesion, scratch resistance, solvent resistance and weatherability when it is applied to the surface of a synthetic resin lens and is free from fine holes or depressions on the surface, particularly a hard coat having a high refractive index.

**Description**

Field of the Invention

The present invention relates to a composition which can be advantageously used as a coating for forming a hard coat used to provide scratch resistance to a synthetic resin and to a production process thereof.

Description of the Prior Art

Synthetic resin lenses (plastic lenses) have been rapidly spread in recent years as they have features which are not attained by glass lenses, such as light weight, safety, processability and fashionability. However, as the plastic lenses generally have a lower refractive index than glass lenses, the peripheries of the lenses tend to become thick. Therefore, in the field of synthetic resin lenses, a synthetic resin lens having a high refractive index is made thin.
Meanwhile, the plastic lenses generally have a silicone coating film on the surface as they are easily scratched. This silicone-based coating film is formed by applying a coating composition essentially composed of silica fine particles, a polymerizable alkoxysilane compound, a polymerization catalyst, an acid aqueous solution and an organic solvent (refer to JP-B 57-2735; to be also referred to as "low-refractive index coating composition" hereinafter) to the surface of a synthetic resin lens and heating the composition to cure it and vaporize the solvent.
However, when a coating film is formed on a plastic lens having a high refractive index of 1.60 or 1.67 by using a low-refractive index coating composition, an interference fringe is formed by a difference in refractive index between the plastic lens and the coating film with the result of a bad appearance.
To solve the above problem, (i) a coating composition prepared by substituting Sb, Ti, Zr and Sn composite metal oxide having a high refractive index for the silica fine particles as one of the components of the above coating composition (JP-A 5-264805), (ii) a coating composition prepared by substituting Ti, Ce and Sn composite metal oxide (JP-A 10-245523), (iii) a coating composition prepared by substituting Sn, Zr, W and Si composite metal oxide (JP-A 2000-281973) and (iv) a coating composition prepared by substituting Sn, Zr, Sb and Si composite metal oxide (JP-A 2004-111837) are now under study.

Summary of the Invention

However, when a hard coat is formed by using the above conventional coating such as (i), (ii), (iii) or (iv) as a hard coating for high-refractive index lenses, it has been found that a large number of invisible holes or depressions having a diameter of 50 to 1, 000 nm are existent on the surface of the lens.
Since these holes and depressions are invisible, the existence of these holes and depressions has been unknown. The existence of such surface defects as the holes and depressions is unfavorable and may cause the deterioration of the physical properties such as chemical resistance, hot water resistance, heat resistance and weatherability of the hard coat.
It is therefore an object of the present invention to provide a coating which is used as a hard coating for high-refractive index lenses and does not produce the above surface defects.
The inventors of the present invention have conducted intensive studies to solve the above problem. As a result, they have found (i) that the production of the above surface defects occurs not only when the hard coatings for high-refractive index lenses of the prior art are used but also when "a coating comprising a metal oxide sol containing an amine compound as a stabilizer" is used and (ii) that when specific two raw materials are first mixed together and the obtained mixture is mixed with the other raw materials to prepare a coating, the production of the above surface defects does not occur. When they have conducted further studies based on these findings, they have found that even a coating composition containing an amine compound is free from the surface defects when the above specific preparation method is employed. The present invention has been accomplished based on this finding.
That is, according to a first aspect of the present invention, there is provided a process for producing a composition comprising (A) a metal oxide sol containing an amine compound, (B) a polycondensable silicon compound having an epoxy group and (C) a curing catalyst, comprising the steps of:

mixing the component (A) with the component (B); and
mixing the obtained mixture with the component (C).

According to a second aspect of the present invention, there is provided a composition comprising the above components (A), (B) and (C), wherein the $^{29}$Si-NMR spectrum of the composition satisfies all conditions represented by the following expressions (1) to (3):

$$X/(X + Y + Z) \leqq 0.1 \qquad (1)$$

$$0.4 \leqq Y/(X + Y + Z) \leqq 0.9 \qquad (2)$$

$$0.1 \leqq Z/(X + Y + Z) \leqq 0.6 \qquad (3)$$

wherein X, Y and Z represent the integrated intensities of peaks existent at the following chemical shift ranges when the $^{29}$Si-NMR of the composition is measured by using heavy methanol ($CD_3OD$) as a measuring solvent at an observation frequency of 99.25 MHz, a 45° pulse frequency of 5.0 $\mu$s, a repetition time of 15 seconds and a broadening factor of 1.21 Hz. [chemical shift ranges of X, Y and Z]

X: -36 to -43 ppm
Y: -45 to -52 ppm
Z: -55 to -65 ppm.

The above composition of the present invention can be advantageously manufactured by the above process of the present invention.

According to a third aspect of the present invention, there is provided a coating composed of the composition of the present invention.

According to a fourth aspect of the present invention, there is provided a plastic lens having a hard coat containing colloidal particles of a metal oxide dispersed in a matrix made of a polysiloxane, wherein substantially no holes or depressions having a diameter of 50 to 1, 000 nm are existent on the surface of the hard coat.

According to a fifth aspect of the present invention, there is provided a process for producing the above plastic lens of the present invention, comprising the step of applying the coating of the present invention to the surface of a plastic lens substrate and the step of curing the coating applied in the above step.

Best Mode for the Embodiment of the Invention

A composition comprising (A) a metal oxide sol containing an amine compound, (B) a polycondensable silicon compound having an epoxy group and (C) a curing catalyst is manufactured by the process of the present invention.

All of these components used in the process of the present invention are used as raw material components for a conventional hard coating, and those which have been used as raw material components for a conventional hard coating can be used without restrictions except that the metal oxide sol is limited to a metal oxide sol containing an amine compound. Each of the above components will be described hereinunder.

In the present invention, a sol containing fine particles of a metal oxide dispersed in a dispersion medium and an amine compound as a stabilizer is used as the component (A). This component serves to provide hardness to the obtained coating film and to control its refractive index when the composition is used as a hard coating.

The above fine particles of a metal oxide are fine particles of an oxide or a composite oxide of a metal element selected from the group consisting of Si, Al, Sn, Sb, Ta, La, Fe, Zr, Sn, Ti, In, W, Zn and Ce. Si is said to be a metalloid element and it cannot be said that it is a metal element according to strict classification. However, it is defined as a metal element herein. Preferred examples of the metal oxide include $SiO_2$, $Al_2O_3$, $SnO_2$, $Sb_2O_5$, $Ta_2O_5$, $La_2O_3$, $Fe_2O_3$, $ZrO_2$, $SnO_2$, $TiO_2$, $In_2O_3$, $WO_3$, $ZnO$, $CeO_2$, and mixtures and composite oxides of two or more selected therefrom. When the metal oxide fine particles are composite oxide fine particles, composite oxide they may be in any form. For example, fine particles are all made of only one composite oxide (homogeneous composition), a metal oxide or composite oxide is dispersed in a matrix made of a different metal oxide or composite oxide, or core particles made of a metal oxide or composite oxide are covered with a layer made of a different metal oxide or composite oxide. In the last form, the exterior layer may have a single-layer structure or multi-layer structure consisting of a plurality of layers made of different materials.

The average particle diameter of the above oxide fine particles is preferably 1 to 300 nm, more preferably 1 to 200 nm so that the obtained coating film has transparency.

In the component (A), the above metal oxide fine particles are dispersed in a dispersion medium. The dispersion medium is preferably water and/or an alcohol. Preferred examples of the alcohol include methanol, ethanol, n-propanol, isopropanol, t-butyl alcohol and n-butyl alcohol. Out of these, methanol and 2-propanol are particularly preferred.

The amount of the dispersion medium is not particularly limited if it is large enough to enable the metal oxide fine particles to exist as a sol. However, it is preferably 50 to 90 mass% based on the mass of a cured product of the metal fine particles and the dispersion medium because the refractive index of a coating layer obtained by using it in the coating composition is increased and the stability of the sol is high.

The metal oxide sol used in the present invention must contain an amine compound. When it does not contain an amine compound, the production of the above surface defects does not occur and therefore the adoption of the process of the present invention is of no significance. An amine compound which is used as a stabilizer for the metal oxide sol (having the function of improving dispersion stability) is used as the amine compound without restrictions. Examples of the amine compound include ammonium; alkylamines such as ethylamine, triethylamine, isopropylamine, n-propylamine, dimethylamine, diethylamine, diisopropylamine and dipropylamine; aralkylamines such as benzylamine; alicyclic amines such as morpholine and piperidine; and alkanolamines such as monoethanolamine, diethanolamine, triethanolamine and isopropanolamine. These amine compounds may be used alone or in combination of two or more. The amount of the amine compound is, for example, 0.01 to 5 mass%, preferably 0.01 to 4 mass% based on the mass of the metal oxide fine particles.

A carboxylic acid compound may be added to the component (A) in an amount of 0.01 to 5 mass% based on the mass of the metal oxide fine particles in order to improve dispersion stability. Examples of the carboxylic acid compound include acetic acid, oxalic acid, lactic acid, malic acid, citric acid, tartaric acid, salicylic acid, glycolic acid, benzoic acid, phthalic acid, malonic acid and mandelic acid.

In order to prevent a reduction in the permeability of the dispersion caused by a reduction in the dispersibility of the metal oxide fine particles and a reduction in the storage stability of the coating composition caused by a reduction in the dispersion stability of the metal oxide fine particles, the above amine compound or the amine compound and the carboxylic acid compound are preferably added to adjust the pH of the metal oxide sol as the component (A) to 4.0 to 9.5.

Illustrative examples of the industrially available metal oxide sol which can be advantageously used as the component (A) in the present invention include an $SnO_2$-$ZrO_2$-$Sb_2O_5$-$SiO_2$ composite metal oxide dispersed in methanol (HX-305M5 of Nissan Chemical Industries, Ltd.), $TiO_2$-$SnO_2$-$ZrO_2$-$Sb_2O_5$ composite metal oxide dispersed in methanol (HIT-30M1 of Nissan Chemical Industries, Ltd.) and $Sb_2O_5$ metal oxide dispersed in methanol (AMT-330S of Nissan Chemical Industries, Ltd.).

In the process of the present invention, the component (B) serves to form a coating film by extracting the metal oxide fine particles contained in the component (A) to cure them and to improve the adhesion of the obtained coating film, for example, a hard coat to the substrate when the composition of the present invention is used as a hard coating and cured.

A silicon compound having an epoxy group and a hydrolyzable group, a partial hydrolysate of the compound and a condensate of the partial hydrolysate can be preferably used as the "polycondensable silicon compound having an epoxy group" which is used as the component (B). The partial hydrolysate and the condensate of the partial hydrolysate can be obtained as a reaction product by mixing the above silicon compound with an acidic aqueous solution. Preferred examples of the silicon compound having an epoxy group and a hydrolyzable group include γ-glycidoxypropyltrimethoxysilane, γ-glycidoxypropylmethyldimethoxysilane, γ-glycidoxypropylmethyldiethoxysilane, γ-glycidoxypropyltriethoxysilane and β-(3,4-epoxycyclohexyl)ethyltrimethoxysilane. These compounds may be used alone or in combination of two or more. Out of these, γ-glycidoxypropyltrimethoxysilane and γ-glycidoxypropylmethyldimethoxysilane are preferred from the viewpoints of adhesion to a lens and crosslinkability. They are preferably mixed with an acid aqueous solution before use.

Any known acid may be used as the acid aqueous solution to be mixed with the silicon compound having an epoxy group and a hydrolyzable group if it has the function of hydrolyzing and condensing the hydrolyzable group contained in the above compound. Illustrative examples of the acid include inorganic acids such as hydrochloric acid, sulfuric acid, nitric acid and phosphoric acid, and organic acids such as acetic acid and propionic acid. Out of these, hydrochloric acid and acetic acid are preferred from the viewpoints of the storage stability and hydrolyzability of the coating composition. The concentration of the acid in the acid aqueous solution is preferably 0.01 N to 5 N. As for the amount of water contained in the acid aqueous solution, water is preferably added in an amount 0.1 to 3 times the total number of mols of the hydrolyzable group to be hydrolyzed in the end contained in the silicon compound.

In the present invention, a "polycondensable silicon compound having no epoxy group" may be added besides the component (B). Although the amount of the compound is not particularly limited, it is preferably used in an amount of 0 to 70 parts by mass, particularly 0 to 50 parts by mass based on 100 parts by mass of the polycondensable silicon compound having an epoxy group (B).

Illustrative examples of the compound which can be used as the "polycondensable silicon compound having no epoxy group" include tetraethoxysilane, tetramethoxysilane, vinyltrimethoxysilane, vinyltriethoxysilane, vinyltriacetoxysilane, methyltrimethoxysilane, methyltriethoxysilane, methyltriphenoxysilane, dimethyldimethoxysilane, trimethylmethoxysilane, phenyltrimethoxysilane, diphenyldimethoxysilane, cyclohexylmethyldimethoxysilane, n-propyltrimethoxysilane, n-butyltrimethoxysilane, isobutyltrimethoxysilane, isobutyltriethoxysilane, n-hexyltrimethoxysilane, n-hexyltriethoxysilane, n-octyltriethoxysilane, n-decyltrimethoxysilane, 3-ureidopropyltriethoxysilane, trifluoropropyltrimethoxysilane, perfluorooctylethyltriethoxysilane, γ-chloropropyltrimethoxysilane, vinyltri(β-methoxy-ethoxy)silane, allyltrimethoxysilane, γ-acryloxypropyltrimethoxysilane, γ-acryloxypropyltriethoxysilane, γ-methacryloxypropyltrimethoxysilane, γ-methacryloxypropyltriethoxysilane, γ-methacryloxypropyldimethoxymethylsilane, γ-mercaptopropyltrialkoxysilane, γ-aminopropyltrimethoxysilane, γ-aminopropyltriethoxysilane, N-phenyl-γ-aminopropyltrimethoxysilane, 3-triethoxysilyl-N-(1,3-dimethyl-butylidene)propylamine, N-2(aminoethyl)3-aminopropyltriethoxysilane, N-2(aminoethyl)3-aminopropyltrimethoxysilane, N-2(aminoethyl)3-aminopropylmethyldimethoxysilane, p-styryltrimethoxysilane, 3-isocyanate propyltriethoxysilane, bis[(3-methyldimethoxysilyl)propyl]polypropylene oxide, bis(trimethoxysilyl)ethane, 2,2-bis(3-triethoxysilylpropoxymethyl)butanol, bis(triethoxysilylpropyl)amine, 1,3-[bis(3-triethoxysilylpropyl)polyethylenoxy]-2-methylenepropane, bis[3-(triethoxysilyl)propyl]-disulfide, 1,6-bis(trimethoxysilyl)hexane, p-bis(trimethoxysilylmethyl) benzene, bis[3-(diethoxymethylsilyl)propyl]carbonate, and reaction products obtained by mixing these compounds with an acid aqueous solution. These compounds may be used in combination of two or more.

To mix the polycondensable silicon compound having no epoxy group with the acid aqueous solution, it is preferred from a view point of facility of the operation that the polycondensable silicon compound having an epoxy group (B) be mixed with the polycondensable silicon compound having no epoxy group and then the obtained mixture be mixed with the acid aqueous solution. As for the amount of water, water is preferably added in an amount 0.1 to 3 times the total number of mols of the hydrolyzable group to be hydrolyzed in the end contained in the silicon compounds.

The component (C) used in the process of the present invention has the function of polymerizing the epoxy group of the polycondensable silicon compound having an epoxy group as the above component (B). Any compound is acceptable as the curing catalyst used as the component (C) if it has the above function, but the following compounds are preferred from the viewpoints of solubility, the storage stability of the finally obtained composition and the hardness of a cured product obtained by curing the composition. They are acetylacetonato complexes containing Li(I), Cu(II), Zn (II), Co(II), Ni(II), Be(II), Ce(III), Ta(III), Ti(III), Mn(III), La(III), Cr(III), V(III), Co(III), Fe(III), Al(III), Ce(IV), Zr (IV) or V (IV) as the main metal atom; perchloric acids such as perchloric acid, magnesium perchlorate, aluminum perchlorate, zinc perchlorate and ammonium perchlorate; organic metal salts such as sodium acetate, zinc naphthenate, cobalt naphthenate and zinc octylate; and Lewis acids such as stannic chloride, aluminum chloride, ferric chloride, titanium chloride, zinc chloride and antimony chloride. These curing catalysts may be used alone or in combination of two or more.

In the production process of the present invention, to manufacture the composition containing the above components (A), (B) and (C) by mixing these components, it is important that the components (A) and (B) should be first mixed together and then the obtained mixture should be mixed with the above component (C). When the three components are mixed together without carrying out the first mixing step, the effect of the present invention cannot be obtained.

In the above first mixing step, the components (A) and (B) are mixed together at a temperature of preferably 10˚C or higher and lower than 40˚C, more preferably 15 to 30˚C for 6 hours or longer. The term "mixing" as used herein means that the components (A) and (B) are kept contacted with each other after they are first contacted with each other. Therefore, the term "mixing" includes stirring mixing and standing mixing. In either case, after they are contacted with each other, they are preferably stirred in the initial stage. When the mixing temperature is lower than 10˚C, the effect of the present invention cannot be obtained without mixing them together for a long time. This is not practical. When the mixing temperature is 40˚C or higher, the pot life (usable time) of the composition obtained in the end becomes short.

The temperature for contacting the components (A) and (B) with each other is not particularly limited but is preferably lower than 40˚C for the same reason as above. The amounts of the both components may be suitably determined according to the composition of the composition to be obtained in the end. When the composition of interest is used as a hard coating, these components are preferably used in the following amounts. That is, as for the component (A), the total mass of the metal fine particles contained in the component (A) is preferably 20 to 70 mass%, particularly preferably 30 to 65 mass% based on the mass of the cured product (to be simply referred to as "mass of the cured product" hereinafter) obtained by curing the composition of interest. When the amount of the metal oxide fine particles is smaller than 20 mass% based on the above standard, the scratch resistance of the coating film, adhesion between the coating film and an inorganic deposited film formed on the coating film as required and the refractive index of the hard coat may become unsatisfactory. When the above amount is larger than 70 mass%, the hard coat may crack.

The amount of the polycondensable silicon compound having an epoxy group as the component (B) is preferably 30 to 80 mass%, particularly preferably 35 to 70 mass% based on the above mass of the cured product when the compound is completely polycondensed. When the amount of the component (B) is smaller than 30 mass% based on the above standard, the hard coat may crack and when the amount is larger than 80 mass%, the scratch resistance of the coating film, adhesion between the coating film and the inorganic deposited film formed on the coating film as required and the refractive index of the hard coat may become unsatisfactory.

The term "mass of the cured product" as used hereinabove means the total of the mass of the metal oxide fine particles and the mass of solid matter obtained by polycondensing or polymerizing the component (B) and the optionally added polycondensable silicon compound having no epoxy group and further an "optionally added epoxy compound" which will be described hereinafter and can be calculated in consideration of the amounts of these components used and changes in mass caused by a reaction. The mass of a volatile component contained in the composition of interest is not included in the "mass of the cured product".

The method of mixing the above two components in the first mixing step is not particularly limited. However, it is preferred that after predetermined amounts of the both components are adjusted to a temperature lower than 40°C, they should be mixed together under agitation. The mixing of the both components is not particularly limited if the component (C) is not existent and may be carried out in the presence of any component other than the components (A) to (C). For example, the component (B) may be mixed with an optional component and then the resulting mixture may be mixed with the component (A).

Examples of the optional component include an epoxy compound, organic solvent, surfactant, antistatic agent, ultraviolet light absorber, antioxidant, dispersion dye, oil-soluble dye, fluorescent dye, pigment, photochromic compound, hindered amine and hindered phenol in addition to the acid aqueous solution and the polycondensable silicon compound having no epoxy group which have already been described in the explanation of the component (B).

The types and amounts of the acid aqueous solution and the polycondensable silicon compound having no epoxy group are already given above. What are used in conventional hard coatings may be used without restrictions as the optional component other than these. The amount of the optional component is the same as that of the conventional hard coating.

Examples of the organic solvent {the dispersion medium of the component (A) is not included in the organic solvent} include alcohols such as methanol, ethanol, n-propanol, isopropanol, n-butanol, t-butanol and n-pentanol; esters such as methyl acetate, ethyl acetate, propyl acetate, ethyl propionate, methyl acetoacetate, ethyl acetoacetate and ethyl lactate; ethers such as ethylene glycol monoisopropyl ether, ethylene glycol monoethyl ether, ethylene glycol mono-n-propyl ether, ethylene glycol mono-n-butyl ether, ethylene glycol mono-t-butyl ether, propylene glycol monomethyl ether, propylene glycol monoethyl ether, propylene glycol mono-n-propyl ether, propylene glycol mono-n-butyl ether, propylene glycol monomethyl ether acetate, propylene glycol monoethyl ether acetate and dioxane; ketones such as acetone, acetylacetone and diacetone alcohol; halogenated hydrocarbons such as methylene chloride; and hydrocarbons such as hexane, heptane, cyclohexane, benzene, toluene and xylene. These organic solvents may be used alone but preferably used in combination of two or more in order to control the physical properties of the coating composition. Out of these organic solvents, at least two selected from the group consisting of methanol, isopropanol, t-butanol, acetylacetone, diacetone alcohol and ethylene glycol monoisopropyl ether are preferably used in combination from the viewpoint of solubility in the optionally used acid aqueous solution, volatility when the coating film is formed by using the composition of interest as a hard coating and the smoothness of the obtained coating film. The amount of the organic solvent is not particularly limited but is preferably 1 to 20 times, particularly preferably 1.5 to 10 times the mass of the cured product.

Examples of the epoxy compound {not including the component (B)} include aliphatic epoxy compounds such as 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of neopentyl glycol hydroxypivalates, trimethylolpropane diglycidyl ether, trimethylolpropane triglycidyl ether, glycerol diglycidyl ether, glycerol triglycidyl ether, diglycerol diglycidyl ether, diglycerol triglycidyl ether, diglycerol tetraglycidyl ether, pentaerythritol diglycidyl ether, pentaerythritol triglycidyl ether, pentaerythritol tetraglycidyl ether, dipentaerythritol tetraglycidyl ether, sorbitol tetraglycidyl ether, diglycidyl ether of tris(2-hydroxyethyl)isocyanurate and triglycidyl ether of tris(2-hydroxyethyl)isocyanurate; alicyclic epoxy compounds such as isophorone diol diglycidyl ether and bis-2,2-hydroxycyclohexylpropane diglycidyl ether; and aromatic epoxy compounds such as resorcin diglycidyl ether, bisphenol A diglycidyl ether, bisphenol F diglycidyl ether, bisphenol S diglycidyl ether, diglycidyl orthophthalate, phenol novolak polyglycidyl ether and cresol novolak polyglycidyl ether.

Out of these, 1,6-hexanediol diglycidyl ether, diethylene glycol diglycidyl ether, trimethylolpropane diglycidyl ether, trimethylolpropane triglycidyl ether, glycerol diglycidyl ether and glycerol triglycidyl ether are particularly preferred. These epoxy compounds may be used in combination of two or more. The amount of the epoxy compound is preferably 0 to 30 mass% of the mass of the cured product.

The components (A) and (B) are mixed together at a temperature of preferably 10°C or higher and lower than 40°C for 6 hours or longer. The mixture is preferably stirred during mixing. The mixing time is not particularly limited if it is 6 hours or longer. When they are mixed together too long, the effect remains unchanged. Therefore, the mixing time is preferably 6 to 50 hours. Preferably, the mixing time is long when the mixing temperature is low. In general, when the mixing temperature is 10 to 15 °C, the mixing time is 15 hours or longer, when the mixing temperature is 15 to 20°C, the mixing time is 12 hours or longer, when the mixing temperature is 20 to 30°C, the mixing time is 8 hours or longer, and when the mixing temperature is higher than 30°C and lower than 40°C, the mixing time is 6 hours or longer.

In the production process of the present invention, the thus obtained mixture of the components (A) and (B) is then mixed with the above component (C) to obtain the composition of interest. The amount of the component (C) may be suitably determined according to the composition to be obtained in the end but preferably 0.01 to 5.0 mass%, particularly preferably 0.1 to 3.0 mass% of the mass of the cured product. The conditions for mixing the mixture of the components (A) and (B) with the above component (C) are not particularly limited but they are mixed together at a temperature of preferably 10 to 40 °C, particularly preferably 15 to 25 °C under agitation. The above optional component may be added when the mixture of the components (A) and (B) is mixed with the component (C) and not when the components (A) and (B) are mixed together.

When the thus obtained composition (composition of the present invention) is used as a hard coating, the obtained hard coating film has substantially no surface defects such as fine holes or depressions as compared with the conventional hard coating. The expression "hard coating film has substantially no surface defects such as fine holes or depressions" means that when the surface of the coating film is observed through a scanning electron microscope, the number of holes or depressions having a diameter of 50 to 1, 000 nm existent in a view field of 50 $\mu$m x 50 $\mu$m, preferably the average number of holes or depressions per field when 10 view fields having the above area are observed is less than 5.

Although the composition of the present invention does not differ from the conventional hard coating in composition, as interaction between the amine compound and the metal oxide fine particles is reduced by the step of mixing the above components (A) and (B), the amine compound easily dissipates when the composition is heated to be cured. Therefore, even when the surface of the film is temporarily roughened by the gasification of the amine compound, the film is recovered from roughness by the flow of the composition, thereby making it possible to obtain a cured film in a good surface state. It is considered that the fact that "interaction between the amine compound and the metal oxide fine particles is reduced" is caused by the occurrence of interaction between the component (B) and the metal oxide fine particles in the step of mixing the components (A) and (B). The occurrence of the interaction can be confirmed indirectly by the $^{29}$Si-NMR measurement of the composition of the present invention.

That is, it can be confirmed by the $^{29}$Si-NMR spectrum of the composition of the present invention satisfying all conditions represented by the following expressions (1) to (3).

$$X/(X + Y + Z) \leqq 0.1 \tag{1}$$

$$0.4 \leqq Y/(X + Y + Z) \leqq 0.9 \tag{2}$$

$$0.1 \leqq Z/(X + Y + Z) \leqq 0.6 \tag{3}$$

X, Y and Z in the above expressions (1) to (3) represent the integrated intensities of peaks existent at the following chemical shift ranges when the $^{29}$Si-NMR of the composition is measured by using heavy methanol (CD$_3$OD) as a measuring solvent at an observation frequency of 99.25 MHz, a 45° pulse frequency of 5.0 $\mu$s, a repetition time of 15 seconds and a broadening factor of 1.21 Hz.

[chemical shift ranges of X, Y and Z]

X: -36 to -43 ppm
Y; -45 to -52 ppm
Z: -55 to -65 ppm

Since the $^{29}$Si-NMR spectrum of a composition prepared without the mixing step of mixing together the components (A) and (B) and mixing the resulting mixture with the component (C) does not satisfy these conditions, the composition of the present invention is characterized in that it gives a $^{29}$Si-NMR spectrum which satisfies all the conditions represented by the above expressions (1) to (3). The $^{29}$Si-NMR spectrum of the composition of the present invention preferably satisfies all conditions represented by the following expressions (1') to (3') from the viewpoint of an effect.

$$X/(X + Y + Z) \leqq 0.05 \tag{1'}$$

$$0.4 \leqq Y/(X + Y + Z) \leqq 0.7 \tag{2'}$$

$$0.3 \leqq Z/(X + Y + Z) \leqq 0.6 \qquad\qquad (3')$$

When the composition of the present invention is used as a coating such as a hard coating, its use method is the same as that of the conventional hard coating. For example, after an optical substrate such as a plastic spectacle lens is subjected to a pre-treatment as required, the composition of the present invention is applied to the optical substrate and cured.

Examples of the above pre-treatment include alkali treatment, acid treatment, surfactant treatment, UV ozone treatment, polishing with organic or inorganic fine particles, primer treatment and plasma or corona discharge treatment.

As for coating and curing, the coating composition can be applied by dipping, spin coating, spraying or flow-coating. For application in spectacle lenses, dipping is preferred to coat both surfaces of a large number of substrates efficiently.

After the application of the composition, the composition is dried with dry air or in air and heated to be cured so as to form a coating film. The heating temperature differs according to the substrate but is generally 80°C or higher, preferably 100°C or higher at which the substrate does not deform, preferably 150°C, for example. The curing time which is connected with the temperature is about 2 hours at 130°C, about 2 to 5 hours at 100 to 120°C. The coating film formed by curing can have a thickness of 0.1 to 50 $\mu$m but particularly preferably 1 to 10 $\mu$m as a coating film for spectacle lenses.

An anti-reflection film made of an inorganic substance may be formed on the surface of the thus obtained coating film. Examples of the method of forming the anti-reflection film include vacuum deposition, ion plating and sputtering. In the case of vacuum deposition, an ion beam assist process in which an ion beam is applied simultaneously during deposition may be employed. The film may be a single-layer anti-reflection film or a multi-layer anti-reflection film. Examples of the inorganic substance used include $SiO_2$, $SiO$, $ZrO_2$, $TiO_2$, $TiO$, $Ti_2O_3$, $Ti_2O_5$, $Al_2O_3$, $Ta_2O_5$, $CeO_2$, $MgO$, $Y_2O_3$, $SnO_2$, $MgF_2$ and $WO_3$. These inorganic substances may be used alone or in combination of two or more.

Not only the composition of the present invention manufactured by the process of the present invention exhibits the same performance as the conventional hard coating but also the hard coat formed from the composition has substantially no surface defects such as fine holes or depressions. Therefore, the hard coat can be expected to have a good microscopic appearance and high durability.

When a hard coating containing an amine compound as a stabilizer like a hard coating for high-refractive index lenses is used, there has not been available technology which prevents the production of surface defects. Therefore, the present invention which provides such technology for the first time has great significance.

The mechanism that the above excellent effect is obtained by the present invention is considered as follows. That is, in the conventional coating composition prepared without carrying out the mixing step as in the production process of the present invention, it is understood from the fact that the amine compound serves as a dispersion stabilizer for metal oxide fine particles that there exists interaction between the amine compound and the metal oxide fine particles in the component (A). Therefore, when the composition is used as a coating, the amine compound is hardly gasified by heating for curing, and the gasification of the amine compound does not end even when the viscosity of the composition becomes high by the proceeding of curing, thereby making it impossible to eliminate the production of fine holes or depressions in the coating film. In contrast to this, it is considered that when the above specific mixing step is carried out in the process of the present invention to obtain the coating composition of the present invention, interaction between the metal fine particles and the amine compound is weakened relatively by interaction (for example, a condensation reaction on the surfaces of the fine particles) between the component (B) and the metal oxide fine particles of the component (A), thereby making it easy for the amine compound to be gasified. Therefore, it is considered that as the dissipation of the amine compound completes before the viscosity of the composition becomes high when it is used as a coating, the above surface defects are not produced.

Examples

The following examples and comparative example are provided for the purpose of further illustrating the present invention but are in no way to be taken as limiting.

The abbreviations and names of the compounds used in the following examples are given below.
Component (A): metal oxide fine particles

· Sol 1 ··· Sn-Zr-Sb-Si sol: tin oxide-zirconium oxide-antimony pentoxide-silicon dioxide composite metal oxide sol dispersed in methanol (solids content of 30.3 mass%, HX-305M5 of Nissan Chemical Industries, Ltd.) When this sol was analyzed, it was confirmed that diisopropylamine was contained as an amine compound in an amount of 0.8 mass%.

· Sol 2 ··· Ti-Zr-Sn-Sb sol: titanium oxide-zirconium oxide-tin oxide-antimony pentoxide composite metal oxide sol dispersed inmethanol (solids content of 30.6 mass%, HIT-30MI of Nissan Chemical Industries, Ltd.) When this sol was analyzed, it was confirmed that diisopropylamine was contained as an amine compound in an amount of 2.1 mass%.

· Sol 3 ··· Sb sol: antimony pentoxide sol dispersed in methanol (solid content of 31.0 mass%, AMT-330S of Nissan Chemical Industries, Ltd.) When the sol was analyzed, it was confirmed that diisopropylamine was contained as an amine compound in an amount of 1.0 mass%.

Component (B): polycondensable silicon compound having an epoxy group

· GTS: γ-glycidoxypropyltrimethoxysilane
· GDS: γ-glycidoxypropylmethyldimethoxysilane
· ETS: β-(3,4-epoxycyclohexyl)ethyltrimethoxysilane

component (C): curing catalyst

· C1: tris(2,4-pentanedionato)aluminum (III)
· C2: tris(2,4-pentanedionato)iron (III)
· C3: 2,4-pentanedionatolithium (I)
· C4: ammonium perchlorate

Other components (D)
(D-1) polycondensable silicon compound having no epoxy group · TES: tetraethoxysilane

· APTES: γ-acryloxypropyltriethoxysilane
· HTS: n-hexyltrimethoxysilane
· OTS: n-octyltrimethoxysilane
· ODTS: n-octadecyltrimethoxysilane
· BIS1: bis[3-(diethoxymethylsilyl)propyl]carbonate
· BIS2: 2,2-bis(3-triethoxysilylpropoxymethyl)butanol

(D-2) epoxy compound

· PETGE: pentaerythritol triglycidyl ether

(D-3) organic solvent

· MeOH: methanol
· EtOH: ethanol
· IPA: isopropanol
· NPA: n-propanol
· NBA: n-butanol
· TBA: t-butanol
· EGPE: ethylene glycol monoisopropyl ether
· EGEE: ethylene glycol monoethyl ether
· EGBE: ethylene glycol mono-t-butyl ether
· PGPE: propylene glycol mono-n-propyl ether
· AcAc: acetylacetone
· DAA: diacetone alcohol

(D-4) surfactant

· L1: silicone-based surfactant (L-7001 (trade name) of Nippon Unicar Co., Ltd.)
· L2: silicone-based surfactant (FZ-2104 (trade name) of Nippon Unicar Co., Ltd.)

Plastic lens substrates

TKA (allyl resin lens; refractive index of 1.60)
TKB (allyl resin lens; refractive index of 1.55)

SE (methacrylic resin + vinyl resin lens; refractive index of 1.60)
MRA (thiourethane resin lens; refractive index of 1.60)
MRB (thiourethane resin lens; refractive index of 1.67)

Example 1

(1) preparation of coating composition

121.3 g of a 0.05N aqueous solution of hydrochloric acid was added to 530.1 g of γ-glycidoxypropyltrimethoxysilane under fully agitation while its liquid temperature was controlled to 40 ˚C or lower and mixed under agitation at room temperature of about 23 ˚C for 3 hours after the start of addition. Then, 2.0 g of a silicone-based surfactant (L-7001 (trade name) of Nippon Unicar Co., Ltd.), 400 g of t-butyl alcohol, 200 g of diacetone alcohol, 200 g of ethylene glycol monoisopropyl ether and 200 g of isopropyl alcohol were added to and mixed with the resulting mixture under fully agitation at 25˚C. 1,250 g of a tin oxide-zirconium oxide-antimony pentoxide-silicon oxide composite metal oxide sol dispersed in methanol (solids content of 30.1 mass%, HX-305M5 of Nissan Chemical Industries, Ltd.) was added to and mixed with the above mixture under agitation at 25˚C for 24 hours (pre-mixing step).

Thereafter, mixture solution of 6.0 g of Al(III)acetylacetonate and 100 g of methanol were added to the mixture obtained in the pre-mixing step and stirred at 25˚C for 1 hour to obtain the coating composition (a) of the present invention.

The silane nuclear magnetic resonance spectrum ($^{29}$Si-NMR) of the obtained coating composition (a) was measured with the nuclear magnetic resonance apparatus (JNM-LA500) of JEOL Ltd. by using heavy methanol ($CD_3OD$) as a measurement solvent at an observation frequency of 99.25 MHz, a 45˚ pulse frequency of 5.0 $\mu$s, a repetition time of 15 seconds and a broadening factor of 1.21 Hz.

When the integrated intensity (X) of peaks existent at a chemical shift range of -36 to -43 ppm, the integrated intensity (Y) of peaks existent at a chemical shift range of -45 to -52 ppm and the integrated intensity (Z) of peaks existent at a chemical shift range of -55 to -65 ppm were investigated from the obtained spectrum, X = 0.00, Y = 1.00, Z = 0.75, X/ (X + Y + Z) = 0.00 or less, Y/(X + Y + Z) = 0.57 and Z/(X + Y + Z) = 0.43.

(2) formation of coating film

A thiourethane lens (MR8 of Mitsui Toatsu Chemicals, Inc.) having a refractive index of 1.60 which was immersed in a 10 % NaOH aqueous solution at 40˚C for 5 minuites was dipped in the coating composition (a) obtained in the above step (1) and pulled up at a rate of 30 cm/min to coat the thiourethane lens with the coating composition. Dipping was carried out at a relative humidity of 40 to 60 %RH and a temperature of 22 to 25˚C. After it was dried at 70˚C for 20 minutes, it was kept at 120˚C for 4 hours to cure the coating composition so as to form a coating film.

The obtained coating film was an achromatic transparent film having a thickness of about 2 $\mu$m and a refractive index of 1.60.

The obtained coating film was evaluated for the following items (1) to (5).

It was evaluated as O for microscopic appearance, O for solvent resistance, A for scratch resistance, 100/100 for adhesion and 100/100 for weatherability.

Evaluation items

(1) microscopic appearance

The surface of the coating film was observed through the field emission type scanning electronic microscope of Philips Electron Optics Co., Ltd. (FE-SEM, XL30S). It was observed at an acceleration voltage of 5 kV to count the number of holes on the surface of the coating film. The microscopic appearance of the coating film was evaluated as ○ when the number of holes or depressions having a diameter of 50 to 1,000 nm existent in a 50 $\mu$m x 50 $\mu$m area was less than 5, ∆ when the number of holes or depressions was 5 or more and less than 20, and × when the number of holes or depressions was 20 or more. The observation was carried out in 10 view fields having the above area, and the average number of holes or depressions in each view field was obtained to evaluate the microscopic appearance of the coating film.

(2) solvent resistance

A lens coated with the coating composition was impregnated with methanol, isopropyl alcohol, toluene, acetone and a 0.4 mass% NaOH aqueous solution for 24 hours to check a change in the surface state of the lens. The solvent resistance of the coating film was evaluated as O when the surface state of the lens remained unchanged and × when the surface state was changed.

(3) scratch resistance

The surface of the lens was rubbed with steel wool (Bonster #0000 of Nippon Steel Wool Co., Ltd.) 10 times under a load of 1 kg to check the scratch on surface visually. The evaluation criteria are given below.

    A: rarely scratched
    B: slightly scratched
    C: the coating film peels off

(3) adhesion

A cross-cut adhesion test was carried out on the coating film to evaluate adhesion between the coating film and the lens in accordance with JISD-0202. That is, cuts were made in the surface of the lens with a cutter knife at intervals of about 1 mm to form 100 squares. Cellophane adhesive tape (of Nichiban Co., Ltd.) was strongly affixed to the surface and pulled off in a direction of 90˚ from the surface to count the number of the remaining squares of the coating film. The evaluation result is represented by the number of the remaining squares/100.

(5) weatherability

To evaluate the durability of the coating film through exposure to light, the following deterioration promotion test was conducted. That is, the deterioration promotion test was made on a lens having the obtained coating film with the xenon weather meter X25 of Suga Shikenki Co., Ltd. for 200 hours. Thereafter, the adhesion of the coating film was evaluated in the same manner as in the above paragraph (4).

Examples 2 to 11

Components shown in Table 1 were mixed together to prepare coating compositions (b) to (i) in the same manner as the coating composition (a) in Example 1. Table 1 shows a solution containing the component (A) as the first component, a solution containing the component (B) as the second component and a solution containing the component (C) as the third component of the present invention. Conditions for preparing the coating compositions and the $^{29}$Si-NMR measurement results of the coating compositions are shown in Table 2.
A coating film was formed from the each of the compositions on the surface of a plastic lens substrate shown in Table 3 to form a coating film in the same manner as in Example 1. The obtained coating film was evaluated in the same manner as in Example 1. The results are shown in Table 3.

Comparative Examples 1 to 3

Coating compositions having composition shown in Table 2 were prepared under conditions shown in Table 2. The $^{29}$Si-NMR measurement of the obtained compositions was carried out in the same manner as in Example 1. The results are shown in Table 2.
A coating film was formed from each of the above compositions on the surface of a plastic lens substrate shown in Table 3 in the same manner as in Example 1 to form a coating film. The obtained coating film was evaluated in the same manner as in Example 1. The results are shown in Table 3.

Table 1

| Coating composition | First component | | second component | | | | | 0.05 N hydrochloric acid aqueous solution (g) | third component | |
|---|---|---|---|---|---|---|---|---|---|---|
| | component A (g) | D-3 (g) | component B (g) | D-1 (g) | D-2 (g) | D-3 (g) | D-4 (g) | | component C (g) | D-3 (g) |
| a | Sol 1 1250 | - | GTS 530.1 | - | - | TBA/DAA/EGPE/IPA 400/200/200/200 | L1 2 | 121.3 | C1 6 | MeOH 100 |
| b | Sol 1 1250 | - | GTS 412.5 | TES 262.5 | - | TBA/DAA/IPA 370/185/90 | L1 1.5 | 185.3 | C1 6 | MeOH/IPA 70/180 |
| c | Sol 1 1500 | - | GTS 560 | - | - | TBA/NPA 400/200 | L1 2 | 129 | C1 7 | MeOH/EGEE 150/60 |
| d | Sol 1 2000 | - | GTS/GDS 500/170 | - | - | TBA 100 | L1 2 | 150 | C1 7.5 | MeOH 200 |
| e | Sol 1 1250 | MeOH 100 | GTS 530.1 | - | - | TBA/DAA/EGPE/IPA 400/200/200/200 | L1 2 | 121.3 | C1 6 | - |
| f | Sol 1 1250 | - | GTS 320 | APTES/BIS2 110/185 | - | TBA/EtOH/PGPE 500/100/125 | L2 1.5 | 155 | C1/C3 5/2 | MeOH/AcAc 150/100 |
| g | Sol 2 1250 | - | GTS/ETS 450/50 | ODTS 43 | - | TBA/NBA/AcAc 500/250/150 | L1 2 | 132 | C1/C2 6/0.5 | MeOH 180 |
| h | Sol 3 1250 | - | GTS 318 | TES/BIS1 130/176.3 | - | TBA/DAA/IPA 370/185/170 | L2 1.5 | 150 | C1/C4 5/0.5 | MeOH/EGBE 70/180 |
| i | Sol 3 1250 | - | GTS 400 | TES/HTS/OTS 100/30/10 | PETGE 15 | TBA/DAA/EtOh 600/200/100 | L1 2 | 155 | C1 6.5 | MeOH/EGPE 100/50 |

Table 2

| No. | Coating composition | preparation conditions | $^{29}$Si-NMR | | |
|---|---|---|---|---|---|
| | | | X/ (X+Y+Z) | Y (X+Y+Z) | Z/(X+Y+Z) |
| Ex. 1 | a | The first component and the second component are mixed together under agitation at 25°C for 24 hours and then the third component is added to the resulting mixture and stirred at 25°C for 1 hour. | 0.00 | 0.57 | 0.43 |
| Ex. 2 | a | The first component and the second component are mixed together under agitation at 15°C for 20 hours and then the third component is added to the resulting mixture and stirred at 15°C for 1 hour. | 0.00 | 0.55 | 0.45 |
| Ex. 3 | a | The first component and the second component are mixed together under agitation at 10°C for 24 hours and then the third component is added to the resulting mixture and stirred at 25°C for 1 hour. | 0.01 | 0.54 | 0.45 |
| Ex. 4 | b | The first component and the second component are mixed together under agitation at 25°C for 16 hours and then the third component is added to the resulting mixture and stirred at 25°C for 1 hour. | 0.00 | 0.56 | 0.44 |
| Ex. 5 | c | The first component and the second component are mixed together under agitation at 30°C for 12 hours and then the third component is added to the resulting mixture and stirred at 30°C for 1 hour. | 0.01 | 0.52 | 0.47 |
| Ex. 6 | d | The first component and the second component are mixed together under agitation at 10°C for 32 hours and then the third component is added to the resulting mixture and stirred at 10°C for 1 hour. | 0.02 | 0.52 | 0.46 |
| Ex. 7 | e | The first component and the second component are mixed together under agitation at 25°C or 28 hours and then the third component is added to the resulting mixture and stirred at 25°C for 2 hour. | 0.00 | 0.60 | 0.40 |
| Ex. 8 | f | The first component and the second component are mixed together under agitation at 25°C for 24 hours and then the third component is added to the resulting mixture and stirred at 25°C for 1 hour. | 0.00 | 0.55 | 0.45 |

(continued)

| No. | Coating composition | preparation conditions | $^{29}$Si-NMR | | |
|---|---|---|---|---|---|
| | | | X/ (X+Y+Z) | Y (X+Y+Z) | Z/(X+Y+Z) |
| Ex. 9 | g | The first component and the second component are mixed together under agitation at 25°C for 12 hours and then the third component is added to the resulting mixture and stirred at 25°C for 1 hour. | 0.00 | 0.58 | 0.42 |
| Ex. 10 | h | The first component and the second component are mixed together under agitation at 30°C for 8 hours and then the third component is added to the resulting mixture and stirred at 25°C for 1 hour. | 0.01 | 0.58 | 0.41 |
| Ex. 11 | i | The first component and the second component are mixed together under agitation at 10°C for 26 hours and then the third component is added to the resulting mixture and stirred at 25°C for 1 hour. | 0.01 | 0.53 | 0.46 |
| C. Ex. 1 | a | The first, second and third components were mixed together and stirred at 25°C for 24 hours. | 0.11 | 0.64 | 0.25 |
| C.Ex. 2 | d | The first component and the third component are mixed together under agitation at 25°C for 24 hours and then the second component is added to the resulting mixture and stirred at 25°C for 1 hour. | 0.14 | 0.68 | 0.18 |
| C.Ex. 3 | g | The second component and the third component are mixed together under agitation at 25°C for 36 hours and then the third component is added to the resulting mixture and stirred at 25°C for 12 hour. | 0.12 | 0.72 | 0.16 |
| Ex.: Example C.Ex. : Comparative Example | | | | | |

Table 3

| No. | Composition of coating composition | plastic lens substrate | initial | | | | weatherability |
|---|---|---|---|---|---|---|---|
| | | | Microscopic appearance | solvent resistance | scratch resistance | adhesion | weather-resistant adhesion |
| Ex. 1 | a | MRA | ○ | ○ | A | 100/100 | 100/100 |
| Ex. 2 | a | MRA | ○ | ○ | A | 100/100 | 100/100 |
| Ex. 3 | a | MRA | ○ | ○ | A | 100/100 | 100/100 |
| Ex. 4 | b | MRA | ○ | ○ | A | 100/100 | 100/100 |
| Ex. 5 | c | MRA | ○ | ○ | A | 100/100 | 100/100 |

(continued)

| No. | Composition of coating composition | plastic lens substrate | initial | | | | weatherability |
|---|---|---|---|---|---|---|---|
| | | | Microscopic appearance | solvent resistance | scratch resistance | adhesion | weather-resistant adhesion |
| Ex. 6 | d | SE | ○ | ○ | A | 100/100 | 100/100 |
| Ex. 7 | e | MRB | ○ | ○ | A | 100/100 | 100/100 |
| Ex. 8 | f | SE | ○ | ○ | A | 100/100 | 100/100 |
| Ex. 9 | g | MRB | ○ | ○ | A | 100/100 | 100/100 |
| Ex. 10 | h | SE | ○ | ○ | A | 100/100 | 100/100 |
| Ex. 11 | i | TKB | ○ | ○ | A | 100/100 | 100/100 |
| C. Ex. 1 | a | TKA | × | ○ | A | 100/100 | 100/100 |
| C. Ex. 2 | d | TKB | × | ○ | A | 100/100 | 100/100 |
| C. Ex. 3 | g | MRB | × | ○ | A | 100/100 | 100/100 |
| Ex.: Example C.Ex.: Comparative Example | | | | | | | |

As obvious from Table 3, when coating films were formed from the coating compositions of the present invention in Examples 1 to 11 on the surface of a plastic lens substrate, they were excellent in terms of microscopic appearance, solvent resistance, scratch resistance, adhesion and weatherability. They were particularly excellent in terms of appearance in all examples and no holes were observed. Meanwhile, although the coating films formed from the coating compositions of Comparative Examples 1 to 3 were satisfactory in terms of lens physical properties such as solvent resistance, scratch resistance, adhesion and weatherability, they were inferior in microscopic appearance.

**Claims**

1. A process for producing a composition comprising (A) a metal oxide sol containing an amine compound, (B) a polycondensable silicon compound having an epoxy group and (C) a curing catalyst, the process comprising the steps of:

   mixing the component (A) with the component (B); and
   mixing the obtained mixture with the component (C).

2. The process according to claim 1, wherein the components (A) and (B) are mixed together at a temperature of 10°C or higher and lower than 40°C for 6 hours or longer before they are mixed with the component (C).

3. The process according to claim 2, wherein the mixing is carried out by stirring.

4. A composition obtained by the process of claim 1.

5. A composition comprising (A) a metal oxide sol containing an amine compound, (B) a polycondensable silicon compound having an epoxy group and (C) a curing catalyst, wherein the $^{29}$Si-NMR spectrum of the composition satisfies all conditions represented by the following expressions (1) to (3):

$$X/(X + Y + Z) \leqq 0.1 \qquad\qquad (1)$$

$$0.4 \leqq Y/(X + Y + Z) \leqq 0.9 \qquad (2)$$

$$0.1 \leqq Z/(X + Y + Z) \leqq 0.6 \qquad (3)$$

wherein X, Y and Z represent the integrated intensities of peaks existent at the following chemical shift ranges when the $^{29}$Si-NMR of the composition is measured by using heavy methanol ($CD_3OD$) as a measuring solvent at an observation frequency of 99.25 MHz, a 45° pulse frequency of 5.0 $\mu$s, a repetition time of 15 seconds and a broadening factor of 1.21 Hz.

[chemical shift ranges of X, Y and Z]

    X: -36 to -43 ppm
    Y: -45 to -52 ppm
    Z: -55 to -65 ppm

**6.** A coating composition comprising the composition of claim 4 or 5.

**7.** A plastic lens having a hard coat containing metal oxide fine particles dispersed in a matrix made of a polysiloxane, wherein substantially no holes or depressions having a diameter of 50 to 1,000 nm are existent on the surface of the hard coat.

**8.** A process for producing the plastic lens of claim 7, comprising the steps of:

    applying the coating of claim 6 to the surface of a plastic lens substrate; and
    curing the coating applied in the above step.

## INTERNATIONAL SEARCH REPORT

| | International application No. |
|---|---|
| | PCT/JP2005/018827 |

A.   CLASSIFICATION OF SUBJECT MATTER
*C08L83/06*(2006.01), *C08K3/22*(2006.01), *C09D7/14*(2006.01), *C09D183/06*
(2006.01), *G02B1/10*(2006.01)

According to International Patent Classification (IPC) or to both national classification and IPC

B.   FIELDS SEARCHED

Minimum documentation searched (classification system followed by classification symbols)
*C08L83/00*(2006.01)*-C08L83/16*, *C09D7/14*(2006.01),
*C09D183/00*(2006.01)*-C09D183/16*, *G02B1/10*(2006.01)

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)
WPI/L, CAS ONLINE

C.   DOCUMENTS CONSIDERED TO BE RELEVANT

| Category* | Citation of document, with indication, where appropriate, of the relevant passages | Relevant to claim No. |
|---|---|---|
| X | JP 5-19102 A  (Shin-Etsu Chemical Co., Ltd.), 29 January, 1993 (29.01.93), Claims 1 to 3; examples (Family: none) | 1-8 |
| X | JP 4-46975 A  (Shin-Etsu Chemical Co., Ltd.), 17 February, 1992 (17.02.92), Claims 1 to 5; examples (Family: none) | 1-8 |
| X | JP 2-289801 A  (Shin-Etsu Chemical Co., Ltd.), 29 November, 1990 (29.11.90), Claims 1 to 4; page 6, upper right column to lower left column & US 5134191 A | 1-8 |

[X]   Further documents are listed in the continuation of Box C.        [ ]   See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 January, 2006 (05.01.06) | 17 January, 2006 (17.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2005/018827

C (Continuation).   DOCUMENTS CONSIDERED TO BE RELEVANT

| Category* | Citation of document, with indication, where appropriate, of the relevant passages | Relevant to claim No. |
|---|---|---|
| X | JP 1-306477 A  (Shin-Etsu Chemical Co., Ltd.),<br>11 December, 1989 (11.12.89),<br>Claims 1 to 4; comparative examples<br>(Family: none) | 1-8 |
| X | JP 4-213338 A  (Nippon ARC Co., Ltd.),<br>04 August, 1992 (04.08.92),<br>Claims 1 to 3; examples<br>& US 5314947 A          & US 5367019 A | 1-8 |
| X<br>A | WO 01/42381 A1  (TOKUYAMA CORP.),<br>14 June, 2001 (14.06.01),<br>Claims 1 to 4<br>& EP 1153998 A1          & US 6497958 B1 | 7<br>1-6,8 |
| A | JP 8-507804 A  (Essilor International<br>Compagnie Generale d'Optique),<br>20 August, 1996 (20.08.96),<br>Claims 1 to 14<br>& WO 94/20581 A1 | 1-8 |
| A | JP 7-47613 A  (Essilor International<br>Compagnie Generale d'Optique),<br>21 February, 1995 (21.02.95),<br>Claims 1 to 17<br>& EP 614957 A1          & US 2003/0165698 A1 | 1-8 |
| A | JP 9-505089 A  (INSTITUT FUR NEUE MATERIALIEN<br>gemeinnutzige GmbH.),<br>20 May, 1997 (20.05.97),<br>Claims 1 to 19<br>& WO 95/13326 A1 | 1-8 |

Form PCT/ISA/210 (continuation of second sheet) (April 2005)

## INTERNATIONAL SEARCH REPORT

| International application No. |
| --- |
| PCT/JP2005/018827 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

See extra sheet

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

| **INTERNATIONAL SEARCH REPORT** | International application No. |
|---|---|
| | PCT/JP2005/018827 |

Continuation of Box No.III of continuation of first sheet(2)

<Concerning the unity of invention>

Claims 1-6 and 8 relate to a combination of the specific constituents (A), (B) and (C) and pertain to "a process for the production of a composition", "a composition", " a coating material", and "a process for the production of plastic lenses", which are specified in the order of mixing of the constituents (A), (B) and (C) (claims 1-4, 6, 8) and "a composition" comprising a combination of the constituents (A), (B) and (C) which is specified in the NMR spectrum (claim 5). <group 1>

Meanwhile, claim 7 pertains to "a plastic lens" not relating to a combination of the specific constituents (A), (B) and (C). Thus, the invention of claim 7 has no feature in common with the group 1 of inventions, so that group 1 of inventions and the invention of claim 7 do not satisfy the requirement of unity of invention.

In group 1 of inventions, additionally, the feature common to claims 1-4,6 and 8 and claim 5 is a combination of the specific constituents (A), (B) and (C). However, this combination itself is a publicly known one which is currently used as raw material of the coating fluid for hard coats (which the applicant himself admits in the description, page 4). Therefore, the common feature is not a special technical feature.

In group 1 of inventions, therefore, claims 1-4, 6 and 8 and claim 5 do not satisfy the requirement of unity of invention.

Consequently, this application includes three inventions, that is, a group of inventions of claims 1-4, 6 and 8, the invention of claim 5, and the invention of claim 7.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57002735 B
- JP 5264805 A
- JP 10245523 A
- JP 2000281973 A
- JP 2004111837 A